# EUROPÄISCHE PATENTSCHRIFT

(11) **EP 0 387 417 B1**
(45) Veröffentlichungstag und Bekanntmachung des Hinweises auf die Patenterteilung: **23.02.1994**
(21) Anmeldenummer: 89123267.0
(22) Anmeldetag: 15.12.1989
(51) Int. Cl.: B01D 53/36, A62D 3/00

(54) **Verfahren zur Entfernung oder Verminderung von halogenierten Aromaten aus Abgasen von Verbrennungsanlagen für Müll oder Sondermüll**
Method of eliminating or diminishing halogenated aromates in exhaust gases from the combustion of refuse
Méthode pour éliminer ou diminuer des aromates halogénés des gaz d'échappement de l'incinération de déchets

(30) Priorität: 17.03.1989 DE 3908739; 17.03.1989 DE 3908740
(43) Veröffentlichungstag der Anmeldung: 19.09.1990
(73) Patentinhaber: BASF Aktiengesellschaft, 67063 Ludwigshafen (DE)
(72) Erfinder: Kainer, Hartmut, Dr., D-6200 Wiesbaden (DE)

(56) Entgegenhaltungen:
- EP-A- 0 257 893
- DE-A- 3 443 722
- DE-A- 3 505 648
- DE-A- 3 623 492
- DE-C- 3 531 651

## Beschreibung

Die Erfindung betrifft ein verfahren zur Entfernung oder Verminderung von halogenierten Aromaten, insbesondere polychlorierten Phenolen oder polychlorierten Dibenzodioxinen und polychlorierten Biphenylen, aus Abgasen von Verbrennungsanlagen für Müll oder Sondermüll.

Aus der DE-A- 36 23 492 ist bereits ein Verfahren zum Abbau von halogenierten Aromaten bekannt, wobei man die halogenierten Aromaten oder ein die halogenierten Aromaten enthaltendes Substrat in Anwesenheit eines Metalls, Metalloxids, Metallcarbonats, Silikats oder eines Gemisches davon oder im nichtdurchströmten System in Anwesenheit von Flugasche aus Müll- und Abfallverbrennungsanlagen als Katalysator auf 100 bis 800°C erhitzt. Dieses verfahren kann so durchgeführt werden, daß man die Abgase einer solchen katalytischen Nachreinigung durch direktes Überleiten über den Katalysator oder gegebenenfalls gebildete Flugasche unterwirft.

Aus der deutschen Patentschrift DE-C- 35 31 651 ist eine Katalysatorplatte für die Stickoxidreduzierung in Abgasen bekannt, welche aus körnigem Fe₂O₃-Katalysatormaterial und einem Bindemittel gepreßt ist, wobei als Bindemittel Phosphorsäure und Schwefelsäure verwendet werden. Aus der deutschen Patentanmeldung DE-A- 35 05 648 ist ein Katalysator zur selektiven Reduzierung von Stickoxiden in Abgasen sowie ein Verfahren zu dessen Herstellung bekannt, bei welchem ebenfalls Eisenoxid und Chromoxid enthaltende Katalysatoren mittels Phosphorsäure gebunden und mit Schwefelsäure getränkt werden.

Es wurde nun überraschenderweise gefunden, daß sulfat- und/oder phosphathaltige Eisenoxidkatalysatoren, die zur Entfernung von NOₓ-Anteilen aus Abgasen unter Zumischung von Ammoniak verwendet werden, ebenfalls in der Lage sind, den Gehalt an halogenierten Aromaten, insbesondere polychlorierten Phenolen und polychlorierten Dibenzodioxinen und polychlorierten Biphenylen in Abgasen aus Verbrennungsanlagen für Müll oder Sondermüll entweder zu entfernen oder deren Gehalt wesentlich herabzusetzen.

Aufgabe der vorliegenden Erfindung ist daher ein Verfahren der zuvor beschriebenen Art, welches eine Entfernung oder Verminderung solcher halogenierter Aromaten ermöglichst. Weiterhin soll eine genaue Dosierung von Ammoniak vermieden werden und dennoch eine Freisetzung von überschüssigem, zur Verminderung oder Entfernung von NOₓ-Anteilen nicht benötigtem Ammoniak in den behandelten Abgasen vermieden werden.

Zur Lösung dieser Aufgabe dient das erfindungsgemäße Verfahren, bei dem die Abgase der Verbrennung von Müll oder Sondermüll unter Luft- und NH₃-Zusatz einer thermischen Behandlung bei Temperaturen zwischen 300°C und 700°C in Anwesenheit eines sulfat- und/oder phosphathaltigen Eisenoxidkatalysators unterworfen werden.

Es wurde auch gefunden, daß bei Einhaltung einer Reaktionstemperatur oberhalb von 400°C bei Verwendung von stöchiometrisch im Überschuß vorliegendem Ammoniak das in den behandelten Abgasen noch verbliebene Ammoniak vollständig verbrannt wird.

Vorzugsweise ist das Verfahren deshalb dadurch gekennzeichnet, daß man eine Reaktionstemperatur von wenigsten 400°C anwendet und die Ammoniakzugabe größer als die für die Verminderung oder vollständige Entfernung von NOₓ-Anteilen stöchiometrisch erforderliche Zugabemenge einregelt.

Bei dem erfindungsgemäßen Verfahren können alle üblichen Eisenoxidkatalysatoren, sofern sie mit Schwefelsäure und/oder Phosphorsäure einer Vorbehandlung unter Umwandlung mindestens eines Teiles der Oxide in die Sulfate und/oder Phosphate unterzogen werden, Verwendung finden.

Die bei dem erfindungsgemäßen Verfahren verwendeten Katalysatoren enthalten als Hauptbestandteil Eisenoxid oder Mischungen von Eisenoxid und Chromoxid und/oder Manganoxid. Unter dem Ausdruck Eisenoxid und Chromoxid und/oder Manganoxid sind hier auch Eisenerze bzw. Chromerze bzw. Manganerze mit hohen Gehalten an Fe₂O₃ bzw. Fe₃O₄ und Cr₂I₃ bzw.
Manganoxiden zu verstehen. Es müssen daher nicht die reinen Oxide verwendet werden. Die Oxide bzw. Erze werden üblicherweise in geeignet zerkleinerter Form eingesetzt, z.B. Korngröße ≧ 1 bis 2 mm. Vorteilhafterweise werden dem Eisenoxid bzw. der Mischung aus Eisenoxid und Chromoxid und/oder Manganoxid aktivierende Zusätze zudotiert. Bei diesen Zusätzen kann es sich um an sich bekannte Dotierungen handeln, die entweder in Form der Elemente, der Oxide oder anderer geeigneter Salze eingesetzt werden. Beispiele für solche dotierenden Elemente sind Vanadium, Kupfer, Kobalt, Uran, Wolfram, Nickel, Molybdän, Mangan, Zinn, Zink, Beryllium, Bor, Yttrium, Niob, Antimon, Wismuth, Silber sowie Elemente der seltenen Erden in Form von Oxiden. Bei den erfindungsgemäß verwendeten Katalysatoren können ebenfalls Oxide oder Hydroxide des Magnesiums, Aluminiums und Siliziums entweder in den Ausgangsmaterialien als Verunreinigungen vorliegen oder auch absichtlich zugesetzt werden.

Zur Herstellung der bei dem erfindungsgemäßen Verfahren verwendeten Katalysatoren können anorganische und/oder organische Bindemittel verwendet werden. Beispiele für solche organischen Bindemittel sind Tone, insbesondere Bindetone, Kaoline, Al-haltige Verbindungen wie Aluminiumhydroxid und Aluminiumhydroxychlorid, magnesium- oder calciumhaltige Verbindungen, wie Zemente, z.B. Sorel-Zemente, Calciumaluminat- oder Calciumsilikat-Zemente, gegebenenfalls mit feinkörnigem SiO₂, oder Gemische dieser Stoffe.

Als organische Bindemittel können bei dem Verfahren die organischen Bindemittel verwendet werden, die auf dem Feuerfestgebiet an sich bekannt sind. Beispiele für solche organischen Bindemittel sind Zelluloseether, Schmelzkleber, Sinterpulver, Phenolharze, z.B. Phenolnovolake, wobei hier geeignete Härter, z.B. Hexamethylentetramin, verwendet werden können, sowie modifizierte Furanharze, z.B. Furfurylalkoholharze, die ebenfalls mit einem geeigneten Härter, z.B. Hexamethylentetramin, eingesetzt werden.

Neben den anorganischen und/oder organischen Bindemitteln können wahlweise auch noch andere Zusatzstoffe zu dem Ausgangsgemisch für die Herstellung der Katalysatoren zugesetzt werden, welche ebenfalls eine Bindemittelwirkung ausüben können oder bei der späteren Behandlung mit den Säuren reagieren und Sulfate oder Phosphate bilden, die die Festigkeit der letztlich erhaltenen Katalysatoren wesentlich erhöhen. Beispiele für solche Zusatzstoffe sind: Olivin, Talkum, Metallhydroxide oder Carbonate oder Hydrogencarbonate, z.B. von Mg, Al, Fe, Ca, und feinteiliges SiO₂.

Die Verfahrensschritte zur Herstellung eines erfindungsgemäß zu verwendenden Katalysators sind an sich bekannt. Hierzu werden die Ausgangsmaterialien zusammen mit den gegebenenfalls eingesetzten aktivierenden Zusätzen und dem Bindemittel sowie gegebenenfalls einer geringen Menge einer Flüssigkeit, entweder Wasser oder einem organischen Lösungsmittel, wie einem Alkohol, zu einer homogenen Mischung in einem geeigneten Mischer vermischt und hieraus die gewünschten Formkörper gepreßt, wobei diese Formkörper sowohl mit einer Stempelpresse geformt werden können, als auch isostatisch oder stranggepreßt werden können oder auch ausgewalzt werden können.

Anschließend werden diese grünen Formkörper zur beschleunigten Härtung der Bindung entweder nur getrocknet, z.B. im Fall der alleinigen Verwendung von anorganischen Bindemitteln oder sie werden einer für die Aushärtung bei Verwendung von organischen Bindemitteln ausreichenden Temperatur für die erforderliche Zeitspanne ausgesetzt. Die Trocknung bei Verwendung von anorganischen Bindemitteln erfolgt üblicherweise im Bereich zwischen 100 und 150°C, während bei alleiniger Verwendung oder Mitverwendung von organischen Bindemitteln die Temperatur üblicherweise im Bereich zwischen 150°C und 250°C liegt.

Nach der Trocknung bzw. Aushärtung der Formkörper werden diese der Behandlung mit Schwefelsäure und Phosphorsäure, entweder einer gemeinsamen Mischung dieser beiden Säuren oder zuerst der Behandlung mit Schwefelsäure und dann der Behandlung mit Phosphorsäure oder zuerst der Behandlung mit Phosphorsäure und dann der Behandlung mit Schwefelsäure unterzogen. Diese Behandlung kann eine Tränkbehandlung sein, d.h. die Formkörper werden in die Säuremischung oder in die einzelnen Säuren nacheinander eingetauscht, oder die Säuremischung oder die einzelnen Säuren können auch auf die Formkörper aufgesprüht oder aufgestrichen werden. Falls die Formkörper getränkt werden, beträgt die Tränkzeit im allgemeinen zwischen 3 und 100 Sekunden. was von den Abmessungen, insbesondere der Wandstärke der Formkörper abhängig ist.

Alternativ ist es möglich, bereits bei der Herstellung der Rohmischung Schwefelsäure und/oder Phosphorsäure zu den Ausgangsmaterialien zuzusetzen, so daß eine spätere Tränkung der hieraus hergestellten Formkörper mit Schwefelsäure und/oder Phosphorsäure entfallen kann.

Anschließend werden die mit den Säuren behandelten oder diese bei ihrer Herstellung bereits zugesetzt enthaltenden Formkörper getrocknet, üblicherweise während 1 bis 4 Stunden bei einer Temperatur zwischen 110°C und 250°C, und nach Abschluß der Trocknung, d.h. der Entfernung gasförmiger und flüchtiger Bestandteile, erfolgt die Temperbehandlung der Formkörper, wobei eine vorteilhafte Temperatursteigerungsrate 10°C/h bis 200°C/h beträgt. Die Formkörper werden üblicherweise während einer gewissen Zeit zwischen 2 und 24 Stunden auf einer Maximaltemperatur der Temperbehandlung gehalten.

Anschließend werden die Formkörper abkühlen gelassen und sind dann einsatzfertig. Vorzugsweise erfolgt das Tempern in einer Atmosphäre mit reduziertem O₂-Gehalt, z.B. 0,5 bis 10 % O₂, vorzugsweise 2 bis 4 % O₂.

Die Herstellung eines Katalysators wird anhand der folgenden Herstellungsbeispiele näher erläutert.

### Herstellungsbeispiel 1

1,95 kg Eisenerz mit 95 % Fe₂O₃, Rest SiO₂, FeO, Al₂O₃, einer Rohdichte von 3,6 g/cm³ und einer Gesamtporosität von > 15 Vol.-% mit einer Korngröße von 0,09 bis 1,0 mm und 0,6 kg desselben Eisenerzes mit einer Körnung von 0 bis 0,09 mm sowie 0,3 kg Chromerz mit einem Gehalt von 50 % Cr₂O₃, Rest MgO, Fe₂O₃, SiO₂, Al₂O₃, wurden homogen in einem Turbulenzmischer mit 0,15 kg Bindeton und 0,06 kg Aluminiumhydroxid vermischt. Dann wurden 0,3 kg eines modifizierten Furanharzes in Furfurylalkohol und 18 g Hexamethylentetramin zugesetzt und homogen eingearbeitet. Aus dieser Mischung wurden Formkörper mit den Abmessungen von 150 x 150 x 2,4 mm unter einem Druck von 40 N/mm² gepreßt. Zur Trocknung und zur Aushärtung der Bindung wurden die Formkörper auf eine Temperatur von 180°C während 0,5 h erwärmt.

Dieser Katalysatorformkörper wurde in einem Säurebad der folgenden Zusammensetzung während 15 Sekunden durch Eintauchen getränkt, anschließend wurde der Formkörper 2 h bei 200°C getrocknet und dann mit einer Aufheizgeschwindigkeit von 10°C/h auf 450°C für die Temperbehandlung erhitzt. Nach einer Haltezeit von 5 h wurde der Formkörper auf Umgebungstemperatur ausgekühlt und ergab einen feuchtigkeitsbeständigen Katalysator guter Aktivität. Die Temperbehandlung erfolgte in einer Atmosphäre mit 5 % O₂.
- Mischung aus: 25 % Schwefelsäure 95 %ig
25 % Phosphorsäure 70 %ig
50 % Wasser
Auf diese Weise wird ein sulfat- und phosphathaltiger Eisenoxidkatalysator erhalten, der bei dem erfindungsgemäßen Verfahren verwendet werden kann.

### Herstellungsbeispiel 2

4,5 kg Eisenerz mit 90 Gew.-% Fe₂O₃, Rest SiO₂ und Al₂O₃ und einer spezifischen Oberfläche, gemessen nach BET, von 25 m²/g, zerkleinert auf eine Korngröße von maximal 0,5 mm und 4,5 kg Eisenerz mit 95 Gew.-% Fe₂O₃, Rest SiO₂, Al₂O₃ und TiO₂, mit einer spezifischen Oberfläche, gemessen nach BET, von 3 m²/g, zerkleinert auf eine maximale Korngröße von 0,2 mm, 0,6 kg Talkum, 0,1 kg Bentonit und 0,3 kg Bindeton wurden mit 0,08 kg Wasser, worin 0,025 kg Carboxymethylcellulose aufgelöst waren, 0,01 kg konzentrierte Phosphorsäure und 0,04 kg 78 %iger Schwefelsäure zusammengegeben und in einem Mischer gründlich vermischt und für etwa 1 h geknetet. Anschließend wurde die erhaltene teigartige Masse in einer Strangpresse zu einem Wabenkörper verpreßt. Diese Wabenkörper wurden 24 h bei 110°C getrocknet und anschließend einer Temperbehandlung unterzogen, wobei sie mit 20°C/h auf 500°C aufgeheizt, auf dieser Temperatur 5 h gehalten und anschließend abgekühlt wurden.

Dieser Katalysator ist bei dem erfindungsgemäßen Verfahren ebenfalls einsetzbar.

Die Zugabemenge des Ammoniaks wird so eingeregelt, daß ein stöchiometrischer Überschuß erreicht wird. Falls die Abgase aus der Verbrennungsanlage nicht eine Mindesttemperatur von 400°C besitzen, können diese zuvor in geeigneter Weise aufgeheizt werden, beispielsweise unter Einsatz eines Stützbrenners.

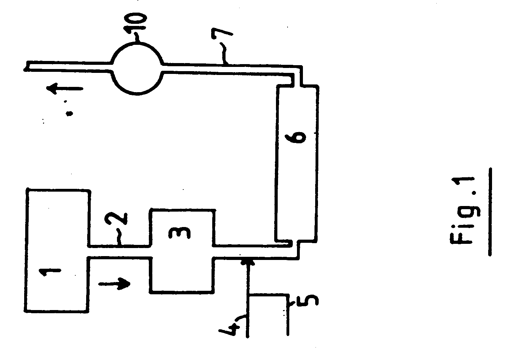

Diese Ausführungsform ist in der Figur 1 der Zeichnung dargestellt.

In Figur 1 ist eine Müllverbrennungsanlage schematisch wiedergegeben, deren Abgase über die Leitung 2 abgegeben werden. In der Leitung 2 ist eine Einrichtung 3 vorgesehen, um die Abgabe auf die geeignete Temperatur von wenigstens 400°C zu bringen, wobei dies entweder ein Wärmetauscher oder ein Stützbrenner sein kann. Über die Leitungen 4 und 5 werden Luft und gasförmiges NH₃ zu den Abgasen zugeführt, diese werden anschließend über den Katalysator 6 geführt und über die Leitung 7 abgegeben. Gegebenenfalls kann noch der in der Figur 1 mit 10 bezeichnete Wäscher zum Auswaschen von Verbrennungsrückständen vorgesehen sein.

Gemäß einer anderen vorteilhaften Ausführungsform des Verfahrens erfolgt die Zugabe des Ammoniak in Teilmengen an verschiedenen Stellen des Katalysators oder bei Aufteilung des Katalysators in mehrere Teilbette jeweils über jedem Teilbett, d.h. die NH₃-Zugabe erfolgt mehrstufig. Hierdurch ist es möglich, eine nicht erwünschte thermische Zersetzung des NH₃ zu reduzieren, was zu Einsparungen von bis zu 10 % der einzusetzenden Ammoniakmenge führen kann.

Die durch das erfindungsgemäße Verfahren mögliche Entfernung oder Verminderung von halogenierten Aromaten betrifft insbesondere polychlorierte Phenole, abgekürzt PCB, ferner polychlorierte Dibenzodioxine und polychlorierte Biphenyle, welche hochtoxische und gegebenenfalls karzinogene Verbindungen sind.

## Patentansprüche

1. Verfahren zur Entfernung oder Verminderung von halogenierten Aromaten, insbesondere polychlorierten Phenolen oder polychlorierten Dibenzodioxinen und polychlorierten Biphenylen, aus Abgasen von Verbrennungsanlagen für Müll oder Sondermüll unter gleichzeitiger Verminderung der NOₓ-Anteile durch thermische Behandlung der Abgase unter Luft- und NH₃-Zusatz bei Temperaturen zwischen 300°C und 700°C in Anwesenheit eines sulfat- und/oder phosphathaltigen Eisenoxidkatalysators.

2. Verfahren nach Anspruch 1, dadurch gekennzeichnet, daß man einen sulfat- und/oder phosphathaltigen Eisenoxidkatalysator verwendet, der bis zu 50 Gew.-%, bezogen auf die hierin enthaltenen Metalle, an Mangan enthält.

3. Verfahren nach Anspruch 1 oder 2, dadurch gekennzeichnet, daß man die Behandlung bei Temperaturen zwischen 400°C und 600°C durchführt.

4. Verfahren nach einem der vorhergehenden Ansprüche, dadurch gekennzeichnet, daß man den Zusatz von NH₃ in mehreren Stufen an unterschiedlichen Stellen des Katalysators durchführt.

5. Verfahren nach einem der vorhergehenden Ansprüche, dadurch gekennzeichnet, daß man eine Reaktionstemperatur von wenigstens 400°C verwendet und die Ammoniakzugabe größer als die für die Verminderung oder vollständige Entfernung von NOₓ-Anteilen stöchiometrisch erforderliche Zugabemenge regelt.

6. Verfahren nach einem der vorhergehenden Ansprüche, dadurch gekennzeichnet, daß man Ammoniak in einem Überschuß von wenigstens 20 %, bezogen auf die stöchiometrisch zur vollständigen Entfernung von NOₓ-Anteilen erforderlichen Zugabemenge, zusetzt.

7. Verfahren nach einem der vorhergehenden Ansprüche, dadurch gekennzeichnet, daß man Ammoniak in einem Überschuß von maximal 100%, bezogen auf die zur vollständigen Entfernung von NOₓ-Anteilen stöchiometrisch erforderlichen Zugabemenge, zusetzt.

## Claims

1. A process for removing or decreasing halogenated aromatics, in particular polychlorinated phenols or polychlorinated dibenzodioxins and polychlorinated biphenyls, from waste gases from incineration plants for refuse or refuse for special treatment while simultaneously decreasing the NOₓ content by thermal treatment of the waste gases with addition of air and NH₃ at from 300°C to 700°C in the presence of a sulfate- and/or phosphate-containing iron oxide catalyst.

2. A process as claimed in claim 1, wherein a sulfate- and/or phosphate-containing iron oxide catalyst is used which contains up to 50% by weight, based on the metals contained therein, of manganese.

3. A process as claimed in claim 1 or 2, wherein the treatment is carried out at from 400°C to 600°C.

4. A process as claimed in one of the preceding claims, wherein the addition of NH₃ is carried out in several stages at different positions in the catalyst.

5. A process as claimed in one of the preceding claims, wherein a reaction temperature of at least 400°C is used and the ammonia addition is greater than the addition amount stoichiometrically necessary for decreasing or completely removing the NOₓ content.

6. A process as claimed in one of the preceding claims, wherein ammonia is added in an excess of at least 20%, based on the addition amount stoichiometrically necessary for the complete removal of the NOₓ content.

7. A process as claimed in one of the preceding claims, wherein ammonia is added in an excess of at most 100%, based on the addition amount stoichiometrically necessary for the complete removal of the NOₓ content.

## Revendications

1. Procédé pour éliminer ou diminuer les composés aromatiques halogénés, en particulier les phénols polychlorés et les dibenzodioxines polychlorées et les diphényles polychlorés, des gaz résiduaires d'installations d'incinération d'ordures ménagères ou d'immondices ou de déchets spéciaux, avec diminution simultanée de la teneur en NOₓ, par traitement thermique des gaz résiduaires sous addition d'air et de NH₃ à une température comprise entre 300°C et 700°C en présence de catalyseurs à base d'oxyde de fer contenant du sulfate et/ou du phosphate.

2. Procédé suivant la revendication 1, caractérisé en ce que l'on utilise un catalyseur à base d'oxyde de fer contenant du sulfate et/ou du phosphate, qui contient jusqu'à 50% en poids de manganèse, calculés par rapport aux métaux présents dans celui-ci.

3. Procédé suivant la revendication 1 ou la revendication 2, caractérisé en ce que l'on effectue le traitement à une température comprise entre 400°C et 600°C.

4. Procédé suivant l'une quelconque des revendications précédentes, caractérisé en ce que l'on effectue l'addition de NH₃ en plusieurs étapes en des endroits différents du catalyseur.

5. Procédé suivant l'une quelconque des revendications précédentes, caractérisé en ce que l'on utilise une température de réaction d'au moins 400°C et en ce que l'on règle l'addition d'ammoniac à une valeur supérieure à la proportion d'addition stoechiométriquement nécessaire à la diminution ou à l'élimination complète des fractions de NOₓ.

6. Procédé suivant l'une quelconque des revendications précédentes, caractérisé en ce que l'on ajoute l'ammoniac en un excès d'au moins 20%, calculés par rapport à la proportion d'addition stoechiométriquement nécessaire à l'élimination complète des fractions de NOₓ.

7. Procédé suivant l'une quelconque des revendications précédentes, caractérisé en ce que l'on ajoute l'ammoniac en un excès d'au maximum 100%, calculés par rapport à la proportion d'addition stoechiométriquement nécessaire à l'élimination complète des fractions de NOₓ.
